Europäisches Patentamt

European Patent Office

Office européen des brevets

(19)

(11) Publication number: **0 202 629**

**A2**

(12) # EUROPEAN PATENT APPLICATION

(21) Application number: **86106722.1**

(22) Date of filing: **16.05.86**

(51) Int. Cl.⁴: **G 02 B 6/28**
**G 02 B 6/10**

(30) Priority: **23.05.85 US 737257**

(43) Date of publication of application:
**26.11.86 Bulletin 86/48**

(84) Designated Contracting States:
**DE FR GB**

(71) Applicant: **AMERICAN TELEPHONE AND TELEGRAPH COMPANY**
**550 Madison Avenue**
**New York, NY 10022(US)**

(72) Inventor: **Ashkin, Arthur**
**Allencrest Road**
**Rumson New Jersey 07760(US)**

(72) Inventor: **Bowers, John Edward**
**9 Dutch Road**
**East Brunswick New Jersey 08816(US)**

(72) Inventor: **Dziedzic, Joseph Martin**
**12 Harold Avenue**
**Clark New Jersey 07066(US)**

(72) Inventor: **Pleibel, William**
**90 Idolstone Lane**
**Matawan New Jersey 07747(US)**

(72) Inventor: **Stolen, Roger Hall**
**77 Waterman Avenue**
**Rumson New Jersey 07760(US)**

(74) Representative: **Blumbach Weser Bergen Kramer**
**Zwirner Hoffmann Patentanwälte**
**Radeckestrasse 43**
**D-8000 München 60(DE)**

(54) Optical devices and systems comprising an optical waveguide coupler.

(57) An optical device or communications system comprising a polarization-selective optical coupler which comprises two polarization-preserving birefringent optical waveguides which are side-by-side and such that propagation constants are mismatched by different amounts for two polarizations of interest. Such couplers are useful, e.g., in wavelength multiplexers, fiber Raman amplifiers, laser sparing connections, and for in-line polarizers where the rejected polarization remains available.

FIG. 1

EP 0 202 629 A2

- 1 -

0202629

## OPTICAL DEVICES AND SYSTEMS COMPRISING
## AN OPTICAL WAVEGUIDE COUPLER

### Technical Field

The invention is concerned with optical coupling between waveguides and, more specifically, with polarization-selective coupling.

### Background of the Invention

Communications systems based on the transmission of light in optical waveguides have emerged as commercially viable alternatives to more traditional systems based on wire and microwave connections, and optical systems are expected to supplant or augment many currently used facilities and generally to increase telecommunications capacity. Optical communications systems typically include a variety of components such as, in particular, light sources, modulators, detectors, waveguides, as well as multiplexing, demultiplexing, and equalizing devices and arrangements. The latter, namely multiplexers, demultiplexers, and equalizers, and other devices in which waves are combined, separated, or transferred typically involve the use of optical couplers between waveguides, and such couplers are used also in devices in fields other than the field of communications. With respect to optical couplers, selected documents as discussed below are of interest.

The paper by R. A. Bergh et al., "Single-mode Fiber Optic Directional Coupler", Electronics Letters, Volume 16 (1980), pages 260-201 discloses couplers made by lapping of quartz blocks which are provided with grooves into which optical fibers are bonded.

U. S. Patent No. 4,315,666, issued February 16, 1982 in the name of J. W. Hicks discloses optical coupling between fibers which are placed side-by-side, a

- 2 -

0202629

portion of cladding material having been removed for lateral coupling.

U. S. Patent No. 4,342,499, issued August 3, 1982 in the name of J. W. Hicks discloses wavelength filtering and selective tuning involving lateral coupling between fibers.

The paper by J. E. Bowers et al, "Fiber-optic Variable Delay Lines", Electronics Letters, Volume 18 (1982), pages 999-1000 discloses chemical etching of V-grooves in silicon in the manufacture of optical couplers.

The paper by W. Pleibel et al., "Polarization-preserving Coupler with Self-aligning Birefringent Fibers", Electronics Letters, Volume 19, No. 20, Sept. 29, 1983, pages 825-826 discloses polarization-preserving coupling between fibers which align and hold the polarization of propagating waves.

The paper by R. H. Stolen et al., "High-birefringence Optical Fibers by Preform Deformation", Journal of Lightwave Technology, Volume LT-2, No. 5 (1984), pages 639-641 discloses a method of preform flattening in the manufacture of polarization-preserving and single-polarization optical fibers.

Summary of the Invention

Optical coupling between waveguides in optical devices and communications systems is effected by a polarization-selective directional coupler. Coupling is between birefringent waveguides in which two orthogonal polarized modes propagate at different velocities as characterized by different effective refractive indices, and coupling is polarization-selective in that the degree of coupling from one waveguide to the other is different for the two polarizations; accordingly, a greater percentage of power is coupled for the one polarized mode as compared with the other. Coupling is directional in that non-coupled power continues to propagate in the original waveguide essentially without reflection.

Optical coupling takes place between polarization-preserving optical waveguides which are placed adjacent and, over a significant distance, in sufficient proximity to each other, and the resulting assembly is characterized in that the propagation constants in the two waveguides for one polarization are more closely matched than the respective propagation constants for the other. Couplers in accordance with the invention are suitable for incorporation in optical communications systems as well as in a variety of optical instruments and devices.

Brief Description of the Drawing

FIG. 1 schematically shows a polarization-selective optical coupler comprising polarization-preserving optical waveguides in accordance with the invention;

FIG. 2 schematically shows an optical communications system comprising a polarization-selective coupler in accordance with the invention;

FIG. 3 schematically shows an optical polarization control and monitoring device comprising an optical coupler in accordance with the invention;

FIG. 4 diagrammatically illustrates coupling efficiency as a function of coupling length for two polarized modes as may be realized in a polarization-selective coupler in accordance with the invention;

FIG. 5 shows in schematic cross section an optical fiber having a stress cladding as may be used in the manufacture of polarization-selective couplers in accordance with the invention;

FIG. 6 schematically shows an optical fiber cross section as is advantageous for a fiber portion in a polarization-selective coupler in accordance with the invention;

FIG. 7 schematically shows an alternate optical fiber cross section as is advantageous for a fiber portion in a polarization-selective coupler in accordance with the invention;

FIG. 8 schematically and in cross section shows a polarization-selective coupler in accordance with the invention;

FIG. 9 schematically and in cross section shows an alternate polarization-selective coupler in accordance with the invention;

FIG. 10 is a diagram facilitating visualization of mismatch of propagation constants as a feature of the invention;

FIG. 11 schematically shows a multiplexer device comprising a polarization-selective coupler in accordance with the invention; and

FIG. 12 schematically shows a fiber Raman amplifier comprising a polarization-selective coupler in accordance with the invention.

Detailed Description

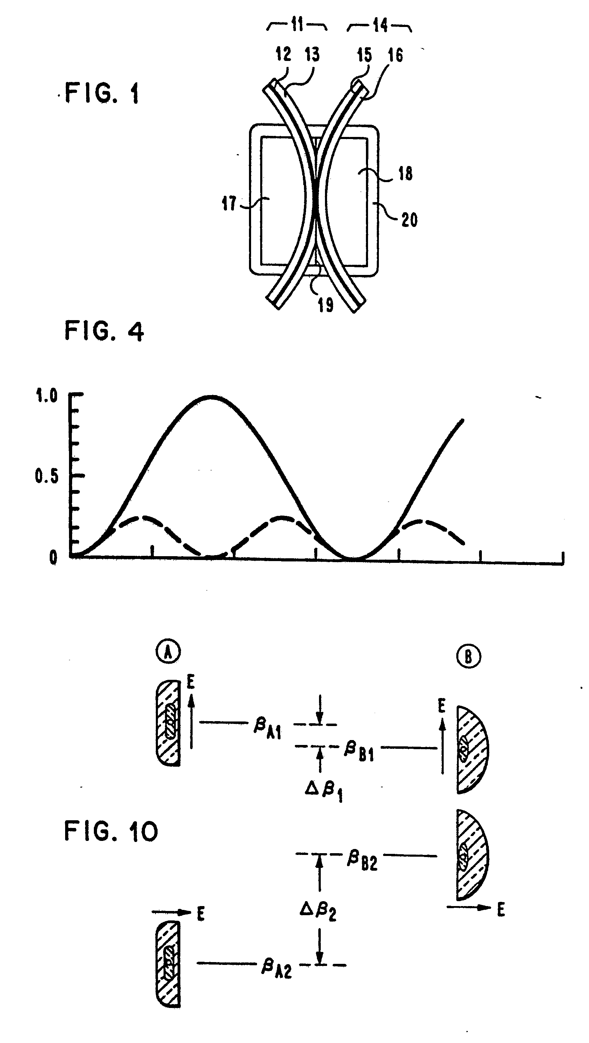

FIG. 1 shows a first optical fiber 11 with waveguiding core 12 and cladding 13, a second optical fiber 14 with waveguiding core 15 and cladding 16, blocks 17 and 18 in which fibers 11 and 12, respectively, are embedded, a layer of an index-matching medium 19 such as, e.g., an oil or adhesive film whose refractive index is close to the refractive indices of the fiber claddings 13 and 16, and an encapsulating layer 20.

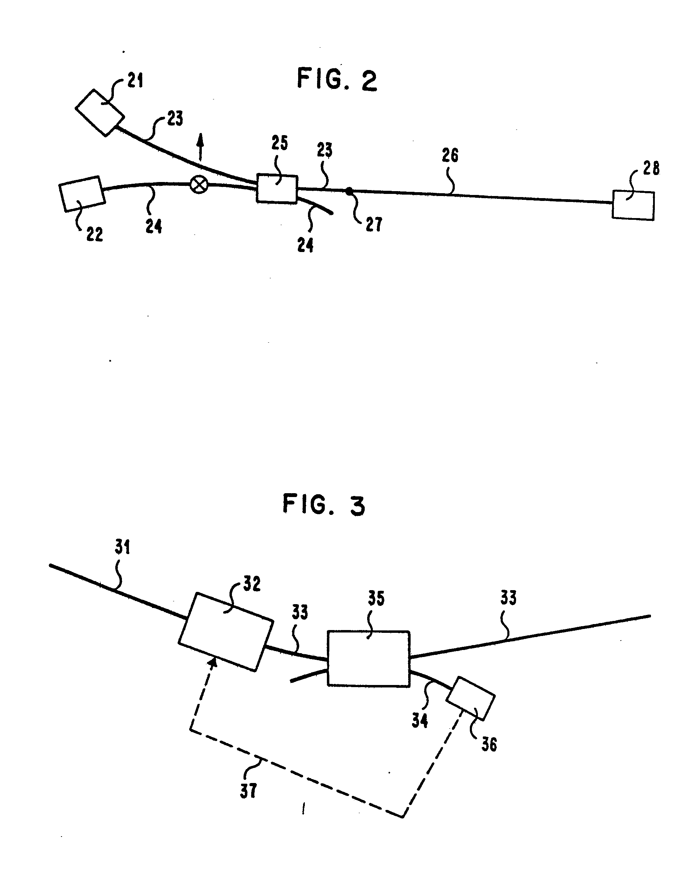

FIG. 2 shows first and second laser diodes 21 and 22, polarization-preserving optical waveguides 23 and 24 which are capable of transmitting light emanating from laser diodes 21 and 22, polarization-selective coupler 25, ordinary optical fiber 26, splice connection 27, and optical detector 28.

FIG. 3 shows an ordinary optical fiber 31, polarization controller 32, polarization-preserving fibers 33 and 34, polarization-selective coupler 35, optical detector 36, and electrical connection 37 between detector 36 and controller 32 to permit the polarization of light output from controller 32 into fiber 33 to be regulated as a function of light intensity sensed by detector 36.

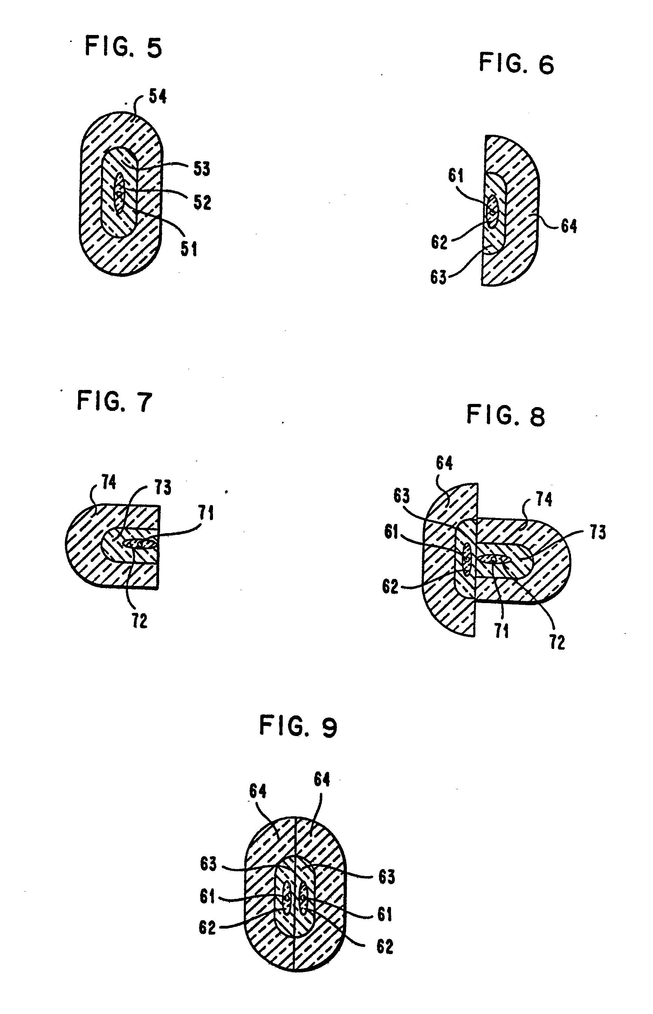

FIG. 4 graphically illustrates fraction of coupled power in an idealized polarization-selective coupler as a function of coupling length (the latter in arbitrary units); the solid line corresponds to coupling of the favored mode and the broken line to coupling of the less favored mode.

FIG. 5 shows core 51, stress cladding 52, optical cladding 53, and fiber substrate 54 of an optical fiber which was drawn from a flattened preform.

FIG. 6 shows core 61, stress cladding 62, optical cladding 63, and fiber substrate 64 of an optical fiber having asymmetrically reduced cladding thickness as produced, e.g., by abrading a fiber of the type illustrated in FIG. 5 parallel to the major axis of the stress ellipse.

FIG. 7 shows core 71, stress cladding 72, optical cladding 73, and fiber substrate 74 of an optical fiber having asymmetrically reduced cladding thickness as produced, e.g., by abrading a fiber of the type illustrated by FIG. 5 perpendicular to the major axis of the stress ellipse.

FIG. 8 and 9 show fiber portions as shown in FIG. 6 and 7 in polarization-selective coupler arrangements in accordance with the invention.

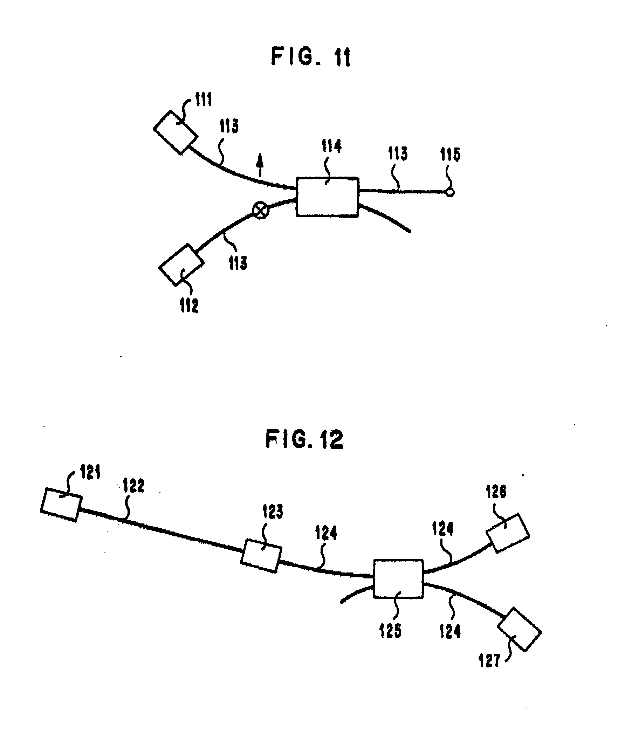

FIG. 10 shows propagation constants and differences between propagation constants for two polarization-selective coupler halves which are designated as A and B, respectively.

FIG. 11 shows laser diodes 111 and 112 serving as modulated optical sources at different wavelengths, polarization preserving fibers 113, polarization-selective coupler 114, and connector 115 for connection of an ordinary optical transmission fiber. The modulated sources 111 and 112 may be single-channel or may each contain several wavelength-multiplexed channels; in the latter case the wavelengths of source 111 are interleaved with those of source 112. The signals from sources 111 and 112 enter the coupler polarized perpendicular to each other.

FIG. 12 shows laser diode 121 serving as modulated optical source, ordinary transmission fiber 122, polarization controller 123, polarization-preserving fibers 124, polarization-selective coupler 125, optical detector 126, and Raman pump source 127. The polarization controller 123 is adjusted so that the signal enters the coupler polarized linear and perpendicular to the pump polarization.

Preferred polarization-preserving birefringent waveguides are optical fibers comprising a waveguiding core-cladding structure which typically is optimized for transmission at a desired wavelength or at wavelengths in a preferred range. Wavelength may correspond to visible, ultraviolet, or infrared radiation.

Polarization-preserving birefringent optical fibers may be provided, e.g., as described in the paper by R. H. Stolen cited above by drawing from a flattened preform; such fibers have a stressed core, with the optical cladding serving also as a stress region. Alternatively, a fiber may include stress regions other than the optical cladding, and birefringence may also be the result of non-circular core cross section as, e.g., in the case of elliptical-core fibers. As a result of suitably chosen internal structure as determined, e.g., by the geometry of material composition (doping geometry) and by the stress distribution, a birefringent waveguide has two mutually perpendicular polarization axes: a fast axis associated with the lower of two refractive indices, and a slow axis associated with the higher refractive index.

Conveniently, manufacture of a polarization-selective coupler in accordance with the invention is by bonding each of two polarization-preserving, birefringent optical fibers into grooves in separate blocks or bodies of a suitable rigid material such as, e.g., silica; grooves may be produced by mechanical means or, as in the case of silicon, by crystallographically preferential chemical etching as disclosed in the paper by J. E. Bowers et al. cited above.

Preferred grooves may be curved or relatively straight, with bends at the ends of straight sections, so that abrading of the resulting assemblies has the effect of removing fiber cladding material over an elongated portion of each fiber; abrading typically is by lapping or polishing. Preferred abrading for each of the fibers is essentially parallel to one of the principal polarization axes, and a coupler can be made by combining fibers such that their fast axes are perpendicular or parallel to each other; see FIG. 8 and 9, respectively.

A coupler can be made by placing fibers adjacent to each other and such that the fiber cores are in sufficient mutual proximity; the resulting structure may be fixed, e.g., by means of clamps, by means of an encapsulation, or by means of a suitable adhesive placed between the two assemblies prior to joining. The application of external pressure is beneficial in the interest of minimizing the thickness of an intermediate index-matching fluid or adhesive; once fiber cores are at a desired distance from each other, further application of pressure was found not to have a significant influence on coupling parameters.

Also, fusion of cladding materials such as, e.g., as a result of localized heating can be used to maintain fiber cores in desired proximity, and localized stretching during a process of heat fusion can be utilized to adjust coupler properties. Fusion may involve aligned fibers in the absence of blocks and thus may result in couplers which occupy a minimum of space.

The polarization selectivity of couplers as described can be understood most readily in terms of mismatch or difference between propagation constants. (The propagation constant of a wave having wavelength $\lambda$ and propagating in a medium having effective refractive index $\underline{n}$ is defined as $(2\pi n)/\lambda$ and typically is expressed in units of $cm^{-1}$.)

To be specific, two waveguides in a coupler of the invention conveniently may be designated as A and B, and two polarizations of interest as 1 and 2, respectively. (See FIG. 10 for a graphical illustration of propagation constants and their differences as discussed in the following.)

If a wave having polarization 1 in waveguide A has propagation constant $\beta_{A1}$, and $\beta_{B1}$ in waveguide B, if a wave having polarization 2 in waveguide A has propagation constant $\beta_{A2}$, and $\beta_{B2}$ in waveguide B, and if it is assumed that the quantity

$$\Delta\beta_1 = |\beta_{A1} - \beta_{B1}|$$

is less than the quantity

$$\Delta\beta_2 = |\beta_{A2} - \beta_{B2}|,$$

then it is desirable, in accordance with the invention, that $\Delta\beta_1$ be minimized and that $\Delta\beta_2$ be maximized.

In practice it will be considered advantageous for $\Delta\beta_1$ to be less than 10 $cm^{-1}$; alternatively, it will also be advantageous for $\Delta\beta_2$ to be at least twice as large as $\Delta\beta_1$. Furthermore, if the quantity $\Delta\beta_1$ is essentially zero (i.e., small as compared with the quantity $\Delta\beta_2$), then it will be desirable for $\Delta\beta_2$ to be

greater than or equal to 10 $cm^{-1}$.

Maximization of mismatch as described above results in further benefits in that, simultaneously, required coupling length is minimized and useful bandwidth of the coupler is maximized.

In one preferred embodiment of the invention, a coupler is such that, over the length of strong coupling between waveguides, a maximum of transmitted power for the one polarization falls at least approximately on a minimum of transmitted power for the other polarization; this case is illustrated by FIG. 4.

An especially favorable situation is realized with respect to maximization of mismatch if optical fibers used in a coupler of the invention are abraded and positioned such that their fast axes are perpendicular to each other. In this case, maximum mismatch is obtained for the less-favored polarization; this case is illustrated by FIG. 8.

The propagation constants are affected by waveguide parameters such as, e.g., core size, difference of refractive index between core and cladding, the amount of birefringence, the depth of polish in the two coupler halves, the orientation of the stress axes of the waveguides, and also the type of adhesive used to bond the fibers into their respective grooves. Concomitant to their influence on propagation constants, these parameters affect the polarization selectivity of a coupler.

For the minimization of mismatch for the favored polarization, it is convenient to choose fiber segments pulled from the same preform to slightly different diameters as propagation constants are shifted primarily as a function of core diameter. Couplers can also be made from fibers having dissimilar internal structure as may be the result of different compositional geometries or stress distributions.

The disclosed polarization-selective couplers are applicable in a variety of devices and systems within as well as outside of the field of communications. For example, such couplers can be used in multiplexing devices and, in particular, in a bandwidth-doubling multiplexing device (see FIG. 11) in which signals at different wavelengths are coupled into a waveguide such that signals adjacent in wavelength are polarized perpendicular to each other. Polarization-selective couplers can also be used in fiber Raman amplifiers (see FIG. 12), and in laser sparing arrangements, and among potential applications outside of the field of communications are interferometric devices which can serve as highly responsive pressure and temperature sensors.

The selectivity of preferred couplers is such that, per unit of input power, the amount of power transferred from one waveguide to the other is at least twice as large for one polarization as compared with another.

Example 1. A polarization-selective coupler was made from segments of the same fiber having a beat length of 1.8 mm at a wavelength of 633 nm. Fiber cross section was oval as resulting from preform deformation prior to fiber drawing. The fibers were epoxied into grooves in silica blocks such that the major axis of the elliptical stress cladding was parallel to the surface of the block in the case of one segment and perpendicular in the other. The resulting assemblies were polished until examination of the light scattered within each assembly showed the length over which the core is close to the surface to be approximately 2 mm; depths of polish were approximately equal for the two fibers. (Measurements were made using a continuous-wave dye laser at a wavelength of 601.5 nm.) The assemblies were juxtaposed and a position was found for which coupling was 64 percent of power for one polarization and 8 percent for the perpendicular polarization. The sum of the outputs of the two fiber segments was 53 percent of laser input power; this is not much less than the expected output of approximately 65 percent for transmission through a single short piece of fiber under similar conditions. Thus, most of the loss can be attributed to coupling loss from the laser to the input fiber, and the loss in the directional coupler is estimated as less than 1 dB. Mismatch was determined as corresponding to approximate values of 11 cm$^{-1}$ for $\Delta\beta_1$ and 25.6 cm$^{-1}$ for $\Delta\beta_2$, mismatch being attributed primarily to difference in polishing direction. The selectivity of the coupler was such that the amount of power coupled for the favored polarization was 8 times that for the unfavored polarization.

Example 2. A 3-dB polarization-selective coupler was made from two segments of the same birefringent fiber as drawn from a flattened preform. The fiber segments were epoxied into silica blocks with the major axes of their elliptical stress claddings parallel to the surface of the blocks. The radii of curvature of the fibers in the blocks were approximately 67 cm and 43 cm, respectively. The coupler holder permitted transverse motion to maximize the coupling and longitudinal motion to study the power transfer as a function of coupling length. Measurements were made at a wavelength of 633 nm. The coupler was adjusted to maximize the coupling for the polarization perpendicular to the polished surfaces of the blocks. At a position corresponding essentially to maximum overlap between polished regions the coupler could be adjusted so as to enhance the power transfer for the perpendicular polarization at the expense of coupling of the parallel polarization. Scattering loss in the coupler was estimated to be on the order of 2 dB and to be only weakly dependent on polarization. Reproduceability of coupling was best under applied external pressure;

coupling efficiency was relatively insensitive to the magnitude of the pressure. Mismatch was determined to correspond to approximate values of 6.8 cm$^{-1}$ for $\Delta\beta_1$ and 14.4 cm$^{-1}$ for $\Delta\beta_2$, and mismatch is attributed primarily to the difference of polishing depth for the two fibers. Coupling of the favored polarization was 50 percent of power, and the selectivity of the coupler was such that coupled power for the favored polarization was 10 times that for the unfavored polarization.

Claims

1. A device comprising an optical waveguide coupler which comprises a first birefringent optical waveguide and a second birefringent optical waveguide, said first waveguide being in proximity to said second waveguide over a significant distance, CHARACTERIZED IN THAT said first waveguide and said second waveguide being essentially polarization-preserving for optical radiation at least at one desired wavelength, the propagation constant mismatch of one polarization of said radiation in said first waveguide as compared with said second waveguide being significantly different from the propagation constant mismatch of another polarization of said radiation in said first waveguide as compared with said second waveguide.

2. The device according to claim 1, CHARACTERIZED IN THAT the first maximum of coupling for the one polarization essentially coincides over said distance with a minimum of coupling for another polarization.

3. The device according to claim 1, CHARACTERIZED IN THAT the diameter of a waveguiding core portion of said first waveguide differs from the diameter of a waveguiding core portion of said second waveguide.

4. The device according to claim 1, CHARACTERIZED IN THAT the internal structure of said first waveguide is different from the internal structure of said second waveguide.

5. The device according to claim 4, CHARACTERIZED IN THAT the material composition of said first waveguide differs from the material composition of said second waveguide.

6. The device according to claim 4,
CHARACTERIZED IN THAT
the stress distribution in said first
waveguide is different from the stress distribution in
said second waveguide.

7. The device according to claim 1,
CHARACTERIZED IN THAT
the fast axis of said first waveguide is
essentially perpendicular to the fast axis of said
second waveguide.

8. The device according to claim 1,
CHARACTERIZED IN THAT
the fast axis of said first waveguide is
essentially parallel to the fast axis of said second
waveguide.

9. The device according to claim 1,
CHARACTERIZED IN THAT
an adhesive material is between said first
waveguide and said second waveguide over said
significant distance.

10. The device according to claim 1,
CHARACTERIZED IN THAT
said first waveguide is fused to said second
waveguide over said significant distance.

11. The device according to claim 1,
CHARACTERIZED BY
comprising a source of light,

12. The device according to claim 1,
CHARACTERIZED IN THAT
said device comprises an optical detector.

13. The device according to claim 1,
CHARACTERIZED IN THAT
said device is an optical multiplexing device.

14. The device according to claim 13,
CHARACTERIZED IN THAT

polarization alternates for adjacent wavelengths.

15. The device according to claim 1, CHARACTERIZED IN THAT said device is an optical fiber Raman amplifier.

16. The device according to claim 1, CHARACTERIZED IN THAT said device is an optical polarization controller in which control is a function of the intensity of light coupled into an optical detector, coupling being by means of the optical coupler.

17. The device according to claim 1, CHARACTERIZED IN THAT said device is an optical communications system comprising a source of optical radiation and an optical waveguide connected to said source of optical radiation.

18. The device according to claim 17, CHARACTERIZED IN THAT said coupler is connected to a spare source of optical radiation.

19. A method for making a device according to claim 1, CHARACTERIZED BY comprising a step of juxtaposing a first polarization-preserving optical waveguide and a second polarization-preserving optical waveguide, said first waveguide and said second waveguide having been provided with reduced optical cladding thickness over a significant distance and such that the propagation constant mismatch of one polarization of radiation in said first waveguide as compared with said second waveguide is different from the propagation constant mismatch of another polarization of radiation in said first waveguide as compared with said second waveguide.

20. The method according to claim 19,
CHARACTERIZED BY
reduced thickness by abrading cladding
material of an optical fiber.

21. The method according to claim 20,
CHARACTERIZED BY
abraiding two optical fibers to different
depths.

FIG. 1

FIG. 4

FIG. 10

## FIG. 2

## FIG. 3

FIG. 5

FIG. 6

FIG. 7

FIG. 8

FIG. 9

FIG. 11

FIG. 12